# EUROPEAN PATENT SPECIFICATION

(11) **EP 1 399 829 B1**
(45) Date of publication and mention of the grant of the patent: **21.06.2006**
(21) Application number: 02718297.1
(22) Date of filing: 18.03.2002
(51) Int. Cl.: G06F 13/40

(54) **END NODE PARTITIONING USING LOCAL IDENTIFIERS**
ENDKNOTENUNTERTEILUNG MITTELS LOKALER IDENTIFIKATOREN
PARTITIONNEMENT DE NOEUD D'EXTREMITE A L'AIDE D'IDENTIFICATEURS LOCAUX

(30) Priority: 29.06.2001 US 895233
(43) Date of publication of application: 24.03.2004
(73) Proprietor: International Business Machines Corporation, Armonk, NY 10504 (US)
(72) Inventor: CRADDOCK, David, New Paltz, NY 12561 (US); ELKO, David, Arlen, Austin, TX 78739 (US); GREGG, Thomas, Anthony, Highland, NY 12528 (US); PFISTER, Gregory, Francis, Austin, TX 78746 (US); RECIO, Renato, John, Austin, TX 78759 (US)
(74) Representative: Williams, Julian David
(86) International application number: PCT/GB2002/001338
(87) International publication number: WO 2003/003229

(56) References cited:
- US-A- 6 061 349
- INFINIBAND TRADE ASSOCIATION: "Infiniband Architecture Specification Volume 1 Release 1.0.a" [Online] 19 June 2001 (2001-06-19) , INFINIBAND TRADE ASSOCIATION XP002220276 Retrieved from the Internet: <URL: www.inifinibandta.org> [retrieved on 2002-10-08] page 121 -page 123 page 455 -page 456 page 110, paragraph 3.9.2.1 -page 112, paragraph 3.9.3.1

## Description

The present invention relates generally to communications between computer systems.

In a System Area Network (SAN), the hardware provides a message passing mechanism which can be used for Input/Output devices (I/O) and interprocess communications between general computing nodes (IPC). Consumers access SAN message passing hardware by posting send/receive messages to send/receive work queues on a SAN channel adapter (CA). The send/receive work queues (WQ) are assigned to a consumer as a queue pair (QP). The messages can be sent over five different defined transport types: Reliable Connected (RC), Reliable datagram (RD), Unreliable Connected (UC), Unreliable Datagram (UD), and Raw Datagram (RawD). In addition there is a set of manufacturer definable operation codes that allow for different companies to define custom packets that still have the same routing header layouts. Consumers retrieve the results of the defined messages from a completion queue (CQ) through SAN send and receive work completions (WC). The manufacturer definable operations are not defined as to whether or not they use the same queuing structure as the defined packet types. Regardless of the packet type, the source channel adapter takes care of segmenting outbound messages and sending them to the destination. The destination channel adapter takes care of reassembling inbound messages and placing them in the memory space designated by the destination's consumer. Two channel adapter types are present, a host channel adapter (HCA) and a target channel adapter (TCA). The host channel adapter is used by general purpose computing nodes to access the SAN fabric. Consumers use SAN verbs to access host channel adapter functions. The software that interprets verbs and directly accesses the channel adapter is known as the channel interface (CI).

InfiniBand (a Trademark of the InfiniBand Trade Association) components are assigned a Local Identifier (LID) during initialization. The LID is used to address a component within a subnet. All InfiniBand packets contain a Source LID and a Destination LID defining the packet's Source and Destination address within the subnet. InfiniBand components are also assigned at least one Partition Key (P_Key). The P_Key is used to partition an InfiniBand fabric into one or more groups. InfiniBand components are then placed into one or more of the groups. All other communications are allowed. The end nodes are grouped into partitions and access is controlled through the P_Key. The InfiniBand partitioning mechanism essentially allows hosts to provide adapters and shared adapters in a controlled manner.

However, InfiniBand does not provide a mechanism for partitioning an end node so that multiple operating system instances that share a single channel adapter port while at the same time gain controlled access to an InfiniBand subnet. Prior art systems typically add extra packet header or headers to identify the operating system instance. By adding packet header or headers this results in more complexity to data transmission. Therefore, this lack of a mechanism for partitioning an end node presents a problem for higher end servers which support partitioning in their processing and memory resources through logical or physical partitioning.

Therefore, a mechanism is needed to allow a single physical component to appear as multiple components with each single component having unique access control levels. The components may be host channel adapters (HCAs), target channel adapters (TCAs) or switches.

The present invention provides a method as claimed in claim 1, a corresponding system as claimed in claim 2 and computer program product as claimed in claim 3.

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
**Figure 1** depicts a diagram of a network computing system in accordance with a preferred embodiment of the present invention;
**Figure 2** depicts a functional block diagram of a host processor node in accordance with a preferred embodiment of the present invention;
**Figure 3** depicts a diagram of a host channel adapter in accordance with a preferred embodiment of the present invention;
**Figure 4** depicts a diagram illustrating processing of work requests in accordance with a preferred embodiment of the present invention;
**Figure 5** depicts an illustration of a data packet in accordance with a preferred embodiment of the present invention;
**Figure 6** depicts a diagram of a physical component with virtual channel adapters and virtual switches in accordance with an embodiment of the present invention;
**Figure 7** is an exemplary flowchart illustrating an operation for a static selection system for a configuration of a physical element in accordance with a preferred embodiment of the present invention;
**Figure 8** is an exemplary flowchart illustrating reporting of host channel adapters and associated nodes as they become operational or are removed from operation in accordance with a preferred embodiment of the present invention; and
**Figure 9** is an exemplary flowchart illustrating an operation for a dynamic selection system for a configuration of a physical element in accordance with a preferred embodiment of the present invention.

A network computing system has end nodes, switches, routers, and links interconnecting these components. The end nodes segment the message into packets and transmit the packets over the links. The switches and routers interconnect the end nodes and route the packets to the appropriate end node. The end nodes reassemble the packets into a message at the destination.

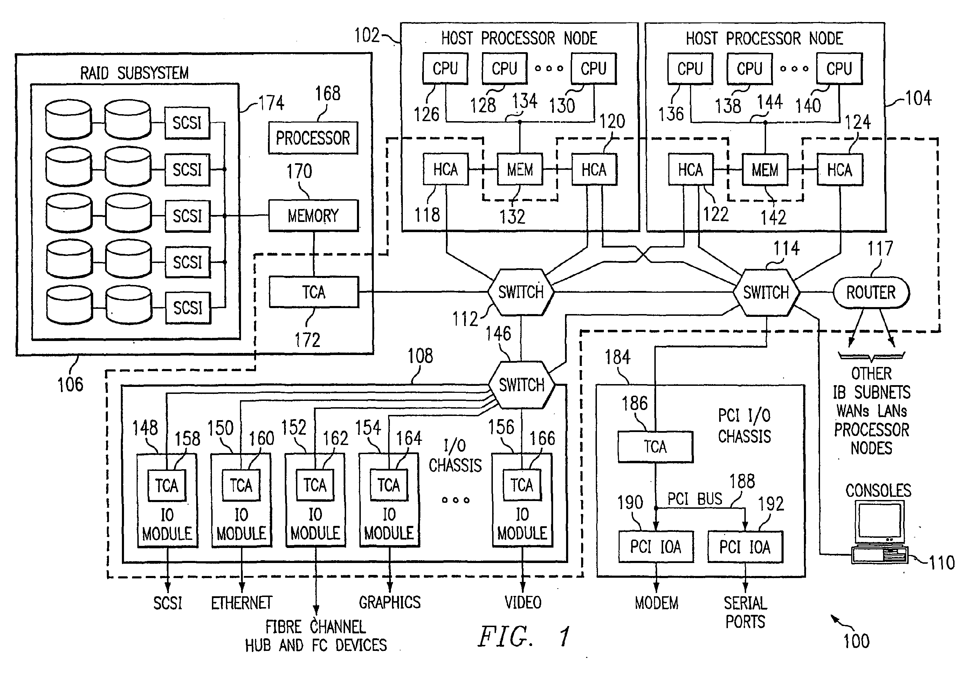

With reference now to the figures and in particular with reference to **Figure 1,** a diagram of a network computing system is illustrated in accordance with a preferred embodiment of the present invention. The network computing system represented in **Figure 1** takes the form of a system area network (SAN) **100** and is provided merely for illustrative purposes, and the embodiments of the present invention described below can be implemented on computer systems of numerous other types and configurations.

SAN **100** is a high-bandwidth, low-latency network interconnecting nodes within the network computing system. A node is any component attached to one or more links of a network and forming the origin and/or destination of messages within the network. In the depicted example, SAN **100** includes nodes in the form of host processor node **102,** host processor node **104,** redundant array independent disk (RAID) subsystem node **106,** I/O chassis node **108,** and PCI I/O Chassis node **184.** The nodes illustrated in **Figure 1** are for illustrative purposes only, as SAN **100** can connect any number and any type of independent processor nodes, I/O adapter nodes, and I/O device nodes. Any one of the nodes can function as an endnode, which is herein defined to be a device that originates or finally consumes messages or frames in SAN **100.**

A message, as used herein, is an application-defined unit of data exchange, which is a primitive unit of communication between cooperating processes. A packet is one unit of data encapsulated by a networking protocol headers and/or trailer. The headers generally provide control and routing information for directing the frame through SAN. The trailer generally contains control and cyclic redundancy check (CRC) data for ensuring packets are not delivered with corrupted contents.

SAN **100** contains the communications and management infrastructure supporting both I/O and interprocessor communications (IPC) within a network computing system. The SAN **100** shown in **Figure 1** includes a switched communications fabric, which allows many devices to concurrently transfer data with high-bandwidth and low latency in a secure, remotely managed environment. Endnodes can communicate over multiple ports and utilize multiple paths through the SAN fabric. The multiple ports and paths through the SAN shown in **Figure 1** can be employed for fault tolerance and increased bandwidth data transfers.

The SAN **100** in **Figure 1** includes switch **112,** switch **114,** switch **146,** and router **117.** A switch is a device that connects multiple links together and allows routing of packets from one link to another link within a subnet using a small header Destination Local Identifier (DLID) field. A router is a device that connects multiple subnets together and is capable of routing frames from one link in a first subnet to another link in a second subnet using a large header Destination Globally Unique Identifier (DGUID).

In one embodiment, a link is a full duplex channel between any two network fabric elements, such as endnodes, switches, or routers. Example suitable links include, but are not limited to, copper cables, optical cables, and printed circuit copper traces on backplanes and printed circuit boards.

For reliable service types, endnodes, such as host processor endnodes and I/O adapter endnodes, generate request packets and return acknowledgment packets. Switches and routers pass packets along, from the source to the destination. Except for the variant CRC trailer field which is updated at each stage in the network, switches pass the packets along unmodified. Routers update the variant CRC trailer field and modify other fields in the header as the packet is routed.

In SAN **100** as illustrated in **Figure 1,** host processor node **102,** host processor node **104,** RAID I/O subsystem **106,** I/O chassis **108,** and PCI I/O Chassis **184** include at least one channel adapter (CA) to interface to SAN **100.** In one embodiment, each channel adapter is an endpoint that implements the channel adapter interface in sufficient detail to source or sink packets transmitted on the SAN fabric. Host processor node **102** contains channel adapters in the form of host channel adapter **118** and host channel adapter **120.** Host processor node **104** contains host channel adapter **122** and host channel adapter **124.** Host processor node **102** also includes central processing units **126-130** and a memory **132** interconnected by bus system **134.** Host processor node **104** similarly includes central processing units **136-140** and a memory **142** interconnected by a bus system **144.** Host channel adapter **118** provides a connection to switch **112,** host channel adapters **120** and **122** provide a connection to switches **112** and **114,** and host channel adapter **124** provides a connection to switch **114.**

In one embodiment, a host channel adapter is implemented in hardware. In this implementation, the host channel adapter hardware offloads much of central processing unit and I/O adapter communication overhead. This hardware implementation of the host channel adapter also permits multiple concurrent communications over a switched network without the traditional overhead associated with communicating protocols. In one embodiment, the host channel adapters and SAN **100** in **Figure 1** provide the I/O and interprocessor communications (IPC) consumers of the network computing system with zero processor-copy data transfers without involving the operating system kernel process, and employs hardware to provide reliable, fault tolerant communications. As indicated in **Figure 1,** router **117** is coupled to wide area network (WAN) and/or local area network (LAN) connections to other hosts or other routers.

The I/O chassis **108** in **Figure 1** includes a switch **146** and multiple I/O modules **148-156.** In these examples, the I/O modules take the form of adapter cards. Example adapter cards illustrated in **Figure 1** include a SCSI adapter card for I/O module **148;** an adapter card to fiber channel hub and fiber channel-arbitrated loop(FC-AL) devices for I/O module **152;** an ethernet adapter card for I/O module **150;** a graphics adapter card for I/O module **154;** and a video adapter card for I/O module **156.** Any known type of adapter card can be implemented. I/O adapters also include a switch in the I/O adapter backplane to couple the adapter cards to the SAN fabric. These modules contain target channel adapters **158-166.**

In this example, RAID subsystem node **106** in **Figure 1** includes a processor **168,** a memory **170,** a target channel adapter (TCA) **172,** and multiple redundant and/or striped storage disk unit **174.** Target channel adapter **172** can be a fully functional host channel adapter.

PCI I/O Chassis node **184** includes a TCA **186** and multiple PCI Input/Output Adapters (IOA) **190-192** connected to TCA **186** via PCI bus **188.** In these examples, the IOAs take the form of adapter cards. Example adapter cards illustrated in **Figure 1** include a modem adapter card **190** and serial adapter card **192.** TCA **186** encapsulates PCI transaction requests or responses received from PCI IOAs **190-192** into data packets for transmission across the SAN fabric to an HCA, such as HCA **118.** HCA **118** determines whether received data packets contain PCI transmissions and, if so, decodes the data packet to retrieve the encapsulated PCI transaction request or response, such as a DMA write or read operation. HCA **118** sends it to the appropriate unit, such as memory **132.** If the PCI transaction was a DMA read request, the HCA then receives the response from the memory, such as memory **132,** encapsulates the PCI response into a data packet, and sends the data packet back to the requesting TCA **186** across the SAN fabric. The TCA then decodes the PCI transaction from the data packet and sends the PCI transaction to PCI IOA **190** or **192** across PCI bus **188.**

Similarly, store and load requests from a processor, such as, for example, CPU **126,** to a PCI IOA, such as PCI IOA **190** or **192** are encapsulated into a data packet by the HCA **118** for transmission to the TCA **186** corresponding to the appropriate PCI IOA **190** or **192** across the SAN fabric. The TCA **186** decodes the data packet to retrieve the PCI transmission and transmits the PCI store or load request and data to PCI IOA **190** or **192** via PCI bus **188.** If the request is a load request, the TCA **186** then receives a response from the PCI IOA **190** or **192** which the TCA encapsulates into a data packet and transmits over the SAN fabric to HCA **118** which decodes the data packet to retrieve the PCI data and commands and sends the PCI data and commands to the requesting CPU **126.** Thus, PCI adapters may be connected to the SAN fabric.

SAN **100** handles data communications for I/O and interprocessor communications. SAN **100** supports high-bandwidth and scalability required for I/O and also supports the extremely low latency and low CPU overhead required for interprocessor communications. User clients can bypass the operating system kernel process and directly access network communication hardware, such as host channel adapters, which enable efficient message passing protocols. SAN **100** is suited to current computing models and is a building block for new forms of I/O and computer cluster communication. Further, SAN **100** in **Figure 1** allows I/O adapter nodes to communicate among themselves or communicate with any or all of the processor nodes in network computing system. With an I/O adapter attached to the SAN **100,** the resulting I/O adapter node has substantially the same communication capability as any host processor node in SAN **100.**

**Figure 1** is intended as an example, and not as an architectural limitation for the present invention and is provided merely for illustrative purposes. The embodiments of the present invention, as described below, may be implemented on computer systems of numerous types and configurations. For example, computer systems implementing the present invention may range from a small server with one processor and a limited number of input/output (I/O) adapters to a massive parallel supercomputer system or systems with, for example, hundreds of processor and thousands of I/O adapters. Furthermore, the present invention may be implemented in an infrastructure of remote computer systems connected by, for example, an internet or an intranet.

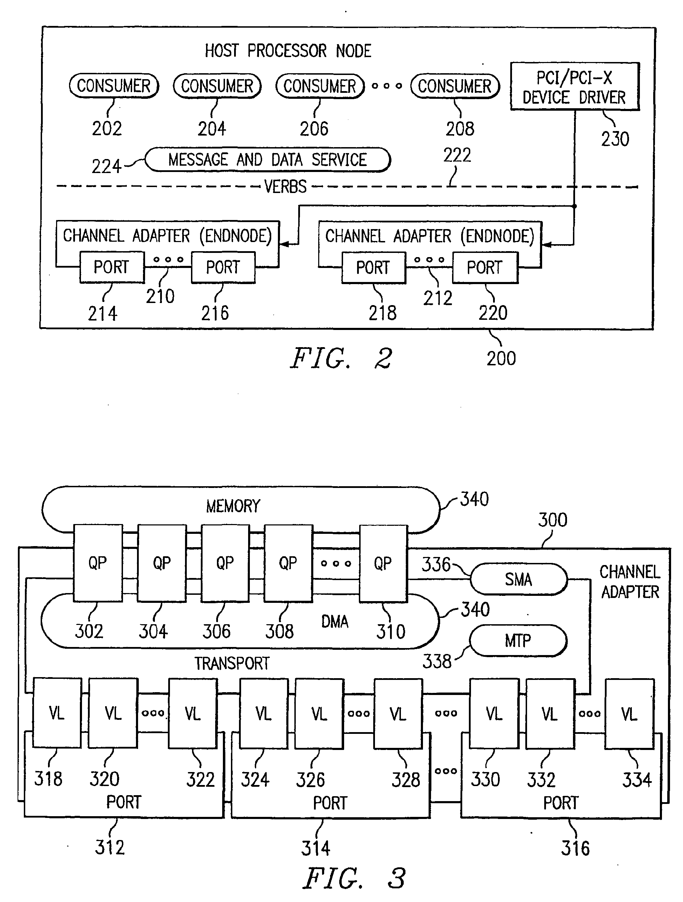

**Figure 2** depicts a functional block diagram of a host processor node in accordance with a preferred embodiment of the present invention. Host processor node **200** is an example of a host processor node, such as host processor node **102** in **Figure 1.**

In this example, host processor node **200** shown in **Figure 2** includes a set of consumers **202-208** and one or more PCI/PCI-X device drivers **230,** which are processes executing on host processor node **200.** Host processor node **200** also includes channel adapter **210** and channel adapter **212.** Channel adapter **210** contains ports **214** and **216** while channel adapter **212** contains ports **218** and **220.** Each port connects to a link. The ports can connect to one SAN subnet or multiple SAN subnets, such as SAN **100** in **Figure 1.** In these examples, the channel adapters take the form of host channel adapters.

Consumers **202-208** transfer messages to the SAN via the verbs interface **222** and message and data service **224.** A verbs interface is essentially an abstract description of the functionality of a host channel adapter. An operating system may expose some or all of the verb functionality through its programming interface. Basically, this interface defines the behavior of the host. Additionally, host processor node **200** includes a message and data service **224,** which is a higher level interface than the verb layer and is used to process messages and data received through channel adapter **210** and channel adapter **212.** Message and data service **224** provides an interface to consumers **202-208** to process messages and other data. In addition, the channel adapter **210** and channel adapter **212** may receive load and store instructions from the processors which are targeted for PCI IOAs attached to the SAN. These bypass the verb layer, as shown in **Figure 2.**

**Figure 3** depicts a diagram of a host channel adapter in accordance with a preferred embodiment of the present invention. Host channel adapter **300** shown in **Figure 3** includes a set of queue pairs (QPs) **302-310,** which are one means used to transfer messages to the host channel adapter ports **312-316.** Buffering of data to host channel adapter ports **312-316** is channeled through virtual lanes (VL) **318-334** where each VL has its own flow control. A Subnet manager (not shown) configures channel adapters with the local addresses for each physical port, i.e., the port's LID. Subnet manager agent (SMA) **336** communicates with the subnet manager for the purpose of configuring the channel adapter. Memory translation and protection (MTP) **338** is a mechanism that translates virtual addresses to physical addresses and validates access rights. Direct memory access (DMA) **340** provides for direct memory access operations using memory (also labelled **340**) with respect to queue pairs **302-310.**

A single channel adapter, such as the host channel adapter **300** shown in **Figure 3,** can support thousands of queue pairs. By contrast, a target channel adapter in an I/O adapter typically supports a much smaller number of queue pairs.

Each queue pair consists of a send work queue (SWQ) and a receive work queue. The send work queue is used to send channel and memory semantic messages. The receive work queue receives channel semantic messages. A consumer calls an operating-system specific programming interface, which is herein referred to as verbs, to place work requests (WRs) onto a work queue.

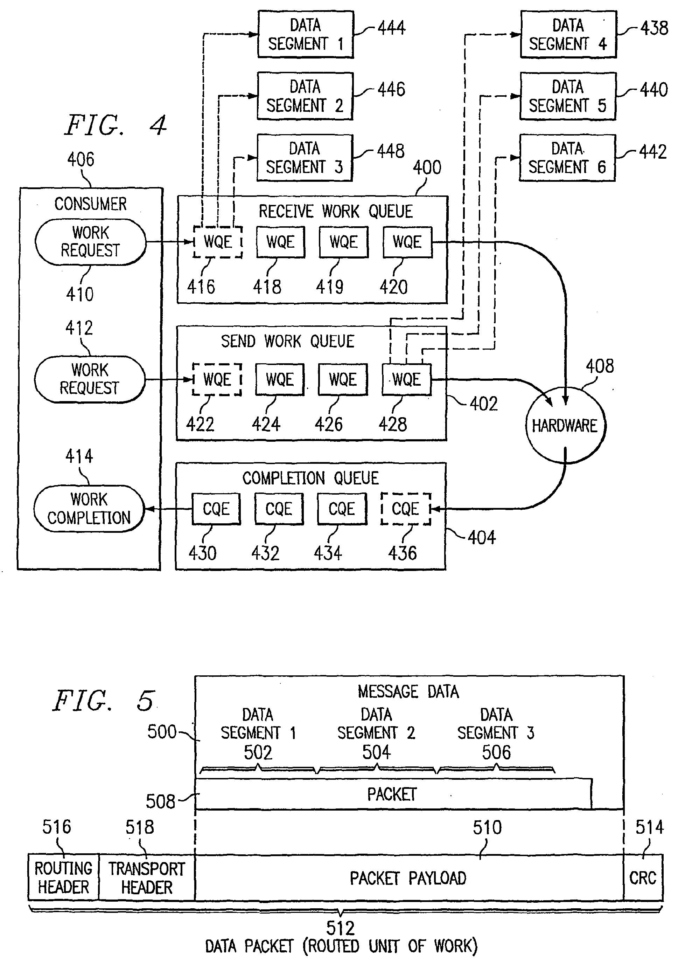

**Figure 4** depicts a diagram illustrating processing of work requests in accordance with a preferred embodiment of the present invention. In **Figure 4,** a receive work queue **400,** send work queue **402,** and completion queue **404** are present for processing requests from and for consumer **406.** These requests from consumer **402** are eventually sent to hardware **408.** In this example, consumer **406** generates work requests **410** and **412** and receives work completion **414.** As shown in **Figure 4,** work requests placed onto a work queue are referred to as work queue elements (WQEs).

Send work queue **402** contains work queue elements (WQEs) **422-428,** describing data to be transmitted on the SAN fabric. Receive work queue **400** contains work queue elements (WQEs) **416-420,** describing where to place incoming channel semantic data from the SAN fabric. A work queue element is processed by hardware **408** in the host channel adapter.

The verbs also provide a mechanism for retrieving completed work from completion queue **404.** As shown in **Figure 4,** completion queue **404** contains completion queue elements (CQEs) **430-436.** Completion queue elements contain information about previously completed work queue elements. Completion queue **404** is used to create a single point of completion notification for multiple queue pairs. A completion queue element is a data structure on a completion queue. This element describes a completed work queue element. The completion queue element contains sufficient information to determine the queue pair and specific work queue element that completed. A completion queue context is a block of information that contains pointers to, length, and other information needed to manage the individual completion queues.

Example work requests supported for the send work queue **402** shown in **Figure 4** are as follows. A send work request is a channel semantic operation to push a set of local data segments to the data segments referenced by a remote node's receive work queue element. For example, work queue element **428** contains references to data segment 4 **438,** data segment 5 **440,** and data segment 6 **442.** Each of the send work request's data segments contains a virtually contiguous memory region. The virtual addresses used to reference the local data segments are in the address context of the process that created the local queue pair.

A remote direct memory access (RDMA) read work request provides a memory semantic operation to read a virtually contiguous memory space on a remote node. A memory space can either be a portion of a memory region or portion of a memory window. A memory region references a previously registered set of virtually contiguous memory addresses defined by a virtual address and length. A memory window references a set of virtually contiguous memory addresses which have been bound to a previously registered region.

The RDMA Read work request reads a virtually contiguous memory space on a remote endnode and writes the data to a virtually contiguous local memory space. Similar to the send work request, virtual addresses used by the RDMA Read work queue element to reference the local data segments are in the address context of the process that created the local queue pair. For example, work queue element **416** in receive work queue **400** references data segment 1 **444,** data segment 2 **446,** and data segment **448.** The remote virtual addresses are in the address context of the process owning the remote queue pair targeted by the RDMA Read work queue element.

A RDMA Write work queue element provides a memory semantic operation to write a virtually contiguous memory space on a remote node. The RDMA Write work queue element contains a scatter list of local virtually contiguous memory spaces and the virtual address of the remote memory space into which the local memory spaces are written.

A RDMA FetchOp work queue element provides a memory semantic operation to perform an atomic operation on a remote word. The RDMA FetchOp work queue element is a combined RDMA Read, Modify, and RDMA Write operation. The RDMA FetchOp work queue element can support several read-modify-write operations, such as Compare and Swap if equal.

A bind (unbind) remote access key (R_Key) work queue element provides a command to the host channel adapter hardware to modify (destroy) a memory window by associating (disassociating) the memory window to a memory region. The R_Key is part of each RDMA access and is used to validate that the remote process has permitted access to the buffer.

In one embodiment, receive work queue **400** shown in **Figure 4** only supports one type of work queue element, which is referred to as a receive work queue element. The receive work queue element provides a channel semantic operation describing a local memory space into which incoming send messages are written. The receive work queue element includes a scatter list describing several virtually contiguous memory spaces. An incoming send message is written to these memory spaces. The virtual addresses are in the address context of the process that created the local queue pair.

For interprocessor communications, a user-mode software process transfers data through queue pairs directly from where the buffer resides in memory. In one embodiment, the transfer through the queue pairs bypasses the operating system and consumes few host instruction cycles. Queue pairs permit zero processor-copy data transfer with no operating system kernel involvement. The zero processor-copy data transfer provides for efficient support of high-bandwidth and low-latency communication.

When a queue pair is created, the queue pair is set to provide a selected type of transport service. In one embodiment, a network computing system implementing the present invention supports four types of transport services.

Reliable and Unreliable connected services associate a local queue pair with one and only one remote queue pair. Connected services require a process to create a queue pair for each process which is to communicate with over the SAN fabric. Thus, if each of N host processor nodes contain P processes, and all P processes on each node wish to communicate with all the processes on all the other nodes, each host processor node requires P² x (N - 1) queue pairs. Moreover, a process can connect a queue pair to another queue pair on the same host channel adapter.

Reliable datagram service associates a local end-end (EE) context with one and only one remote end-end context. The reliable datagram service permits a client process of one queue pair to communicate with any other queue pair on any other remote node. At a receive work queue, the reliable datagram service permits incoming messages from any send work queue on any other remote node. The reliable datagram service greatly improves scalability because the reliable datagram service is connectionless. Therefore, an endnode with a fixed number of queue pairs can communicate with far more processes and endnodes with a reliable datagram service than with a reliable connection transport service. For example, if each of N host processor nodes contain P processes, and all P processes on each node wish to communicate with all the processes on all the other nodes, the reliable connection service requires P² x (N - 1) queue pairs on each node. By comparison, the connectionless reliable datagram service only requires P queue pairs + (N -1) EE contexts on each node for exactly the same communications.

The unreliable datagram service is connectionless. The unreliable datagram service is employed by management applications to discover and integrate new switches, routers, and endnodes into a given network computing system. The unreliable datagram service does not provide the reliability guarantees of the reliable connection service and the reliable datagram service. The unreliable datagram service accordingly operates with less state information maintained at each endnode.

**Figure 5** is an illustration of a data packet in accordance with a preferred embodiment of the present invention. Message data **500** contains data segment 1 **502,** data segment 2 **504,** and data segment 3 **506,** which are similar to the data segments illustrated in **Figure 4.** In this example, these data segments form a packet **508,** which is placed into packet payload **510** within data packet **512.** Additionally, data packet **512** contains CRC **514,** which is used for error checking. Additionally, routing header **516** and transport **518** are present in data packet **512.** Routing header **516** is used to identify source and destination ports for data packet **512.** Transport header **518** in this example specifies the destination queue pair for data packet **512.** Additionally, transport header **518** also provides information such as the operation code, packet sequence number, and partition for data packet **512.** The operating code identifies whether the packet is the first, last, intermediate, or only packet of a message. The operation code also specifies whether the operation is a send RDMA write, read, or atomic. The packet sequence number is initialized when communications is established and increments each time a queue pair creates a new packet. Ports of an endnode may be configured to be members of one or more possibly overlapping sets called partitions.

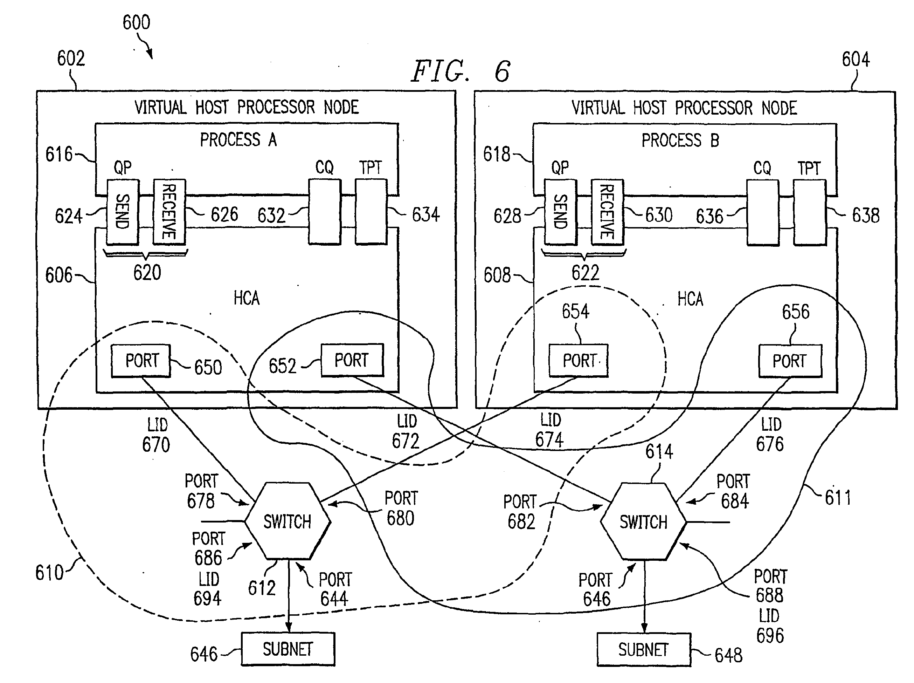

**Figure 6** depicts a diagram of a physical component with virtual channel adapters and virtual switches in accordance with an embodiment of the present invention. **Figure 6** illustrates an internal structure of a multi-function chip containing one or more switches interconnecting one or more HCAs to one or more subnets. Physical element **600** in **Figure 6** includes virtual host processor node **602** and virtual host processor node **604.** Virtual host processor node **602** includes virtual host channel adapter (HCA) **606.** Virtual host processor node **604** includes host channel adapter (HCA) **608.** Virtual HCAs **606** and **608** may have the same attributes as a physical HCA. For example, virtual HCAs **606** and **608,** in this example, have mandatory queue pair numbers 0 and 1.

Physical element **600** in **Figure 6** includes SAN fabric **610** which includes switch **612.** SAN fabric **610** in **Figure** 6 includes a link coupling host channel adapter **606** to switch **612** and a link coupling switch **612** to TCA **642.** Network computing system **600** in **Figure 6** also includes a SAN fabric **611** which includes switch **614.** SAN fabric **611** in **Figure 6** includes a link coupling host channel adapter **608** to switch **614** and a link coupling switch **614** to TCA **644.** Virtual HCA **606** includes port **650** and **652.** Port **650** connects to subnet **646** through port **678** of switch **612.** Port **652** attaches to subnet **648** through port **682** of switch **614.** A subnet manager associated with subnet **646** has assigned LID **670** to port **650** of HCA **606** and LID **694** to port **686** of switch **612.** Port **686** is the InfiniBand Subnet Management Port 0 for switch **612.** A subnet manager is associated with subnet **648** which has assigned LID **672** to port **652** of HCA **606** and LID **696** to port **688** of switch **614.** Port **688** is the InfiniBand Subnet Management Port 0 for switch **614.** Virtual HCA **608** includes ports **654** and **656.** Port **654** is connected to subnet **646** through port **680** of switch **612.** Port **656** attaches to subnet **648** through port **684** of switch **614.** A subnet manager associated with subnet **646** has assigned LID **674** to port 654 of HCA **608.** A subnet associated with subnet **648** has assigned LID **676** to port **656** of HCA **608.**

In the example transactions, host processor node **602** includes client process A **616.** Host processor node **604** includes a client process B **618.** Client process A **616** interacts with host channel adapter hardware **606** through queue pair **620,** completion queue **632** and Translation Protection Table (TPT) **634.** Client process B **618** interacts with host channel adapter **608** through queue pair **622,** completion queue **636** and TPT **638.** Queue pair **620** queue pair **622,** completion queue **632,** completion queue **636,** TPT **634** and TPT **638** are data structures. Queue pair **620** includes a send work queue **624** and a receive work queue **626.** Queue pair **622** includes a send work queue **628** and a receive work queue **630.** Completion queues **632** and **636** consist of a single completion queue. TPTs **634** and **638** consist of a memory consists of a memory address translation and protection table.

A channel adapter, for example a TCA or a HCA, may provide a resource configuration and allocation interface to software, firmware or a hardware state machine which will execute as part of physical element **600.** The resource configuration and allocation interface allows software, firmware, or hardware state machines to set an operating policy for the virtual HCA, for example HCAs **606** and **608** in **Figure 6.** The operating policy may include:
1) number of switches used within a multi-function chip;
2) number of ports per switch;
3) number of switch resources allocated to each switch;
4) number of HCAs used within the multi-function chip;
5) number of ports per HCA; and
6) number of HCA resources allocated to each HCA.

Software, firmware or a hardware state machine may select the actual configuration of physical element **600.** A physical element may be, for example, an HCA. The selection may be static or dynamic. A static selection may require a HCA or a switch configuration to be changed through re-initialization of a fabric and/or a reboot of a node. A dynamic selection allows a HCA or switch configuration change to be made without fabric re-initialization, but may require a boot of the node.

Under a static selection mechanism, physical element **600** may have to report an exact number of virtual switches, HCAs, and host processor nodes that may be included as part of physical element **600** during fabric initialization. A static selection mechanism may provide information whether there are any ports available on the physical element but does not provide information regarding port status without a request for the information. Using a static selection mechanism, each virtual HCA may appear as a distinct, physical HCA. In **Figure 6,** a subnet manager associated with subnet **646** detects switch **612** as a result of probing port **644** with standard InfiniBand subnet management packets (SMPs). Switch **612** appears as a physical switch to the subnet manager associated with subnet **646** and is assigned LID **694** to its SMP port **686.** The subnet manager associated with subnet **646** identifies that switch **612** has two additional ports, ports **678** and **680,** through InfiniBand SMPs. The subnet manager associated with subnet **646** detects HCA **606** as a result of using InfiniBand SMPs to probe switch **612** port **678** and locating HCA **606** port **650.** HCA **606** appears as a physical HCA to the subnet manager associated with subnet **646.** The subnet manager associated with subnet **646** assigns LID **670** to port **650** of HCA **606** using InfiniBand SMPs. Similarly, the subnet manager associated with subnet **646** detects HCA **608** as a result of using InfiniBand SMPs. HCA **608** appears as a physical HCA to the subnet manager associated with subnet **646.** The subnet manager associated with subnet **646** assigns LID **674** to port **654** using InfiniBand SMPs.

Using a dynamic selection mechanism, physical element **600** may report to the largest configurable number of virtual switches and their corresponding topology, but may not report the exact number of HCAs and host processor nodes that may be included as part of physical element **600** during fabric initialization. A dynamic selection mechanism may provide information whether there are any ports available on the physical element and may provide information when a previously unavailable port becomes operational. Similarly, a dynamic selection mechanism may report removal of HCAs and their associated host nodes, as they are removed from operation. Using a dynamic selection mechanism, each virtual HCA may appear as a distinct, physical HCA.

In **Figure 6,** if HCA **606** becomes operational at a later point in time, then the following process may take place. A subnet manager associated with subnet **646** detects switch **612** as a result of probing port **644** with InfiniBand management packets (SMPs). Switch **612** appears as a physical switch to the subnet manager associated with subnet **646** and is assigned LID **694** to its SMP port **686.** The subnet manager associated with subnet **646** identifies that switch **612** has two additional ports, ports **678** and 680, through standard InfiniBand SMPs. The subnet manager associated with subnet **646** detects HCA **606** as a result of using InfiniBand SMPs to probe switch **612,** port **678** and locating HCA **606** port **650.** HCA **606** appears as a physical HCA to the subnet manager associated with subnet **646.** The subnet manager associated with subnet **646** assigns LID **670** to port **650** of HCA using InfiniBand SMPs. At a later point in time, the subnet manager associated with subnet **646** may detect HCA **608** as a result of a SMP sweep by a subnet manager associated with subnet **646** to probe switch **612,** port **680** and locating HCA **608** port **654.**

Alternatively, the subnet manager associated with subnet **646** may detect HCA **608** as a result of a trap from switch **612** indicating a state change. This would cause the subnet manager associated with subnet **646** to use InfiniBand SMPs to probe switch **612,** port **680** and locate HCA **608** port **654.** HCA **608** appears as a physical HCA to the subnet manager associated with subnet **646.** The subnet manager associated with subnet **646** assigns LID **674** to port **654** of HCA **608** using InfiniBand SMPs.

As mentioned above, the present invention provides a method and system for end node partitioning for a physical element. Selection of a configuration of the physical element may be static or dynamic. With a static selection mechanism, a subnet manager may probe the physical element, such as, for example, a switch or HCA, to determine if the physical element is detected. If the physical element is detected then a LID is assigned to the physical element's SMP port. If additional ports are detected for the physical element a LID is assigned to the additional ports.

With a dynamic selection mechanism, HCAs and the HCA's associated host nodes will be reported as they become operational. In addition, the dynamic selection mechanism reports removal of the HCAs and the HCA's associated host nodes as the HCA and the HCA's associated host nodes are removed from operation. When a HCA becomes operational a subnet manager assigns a LID to a port associated with the HCA.

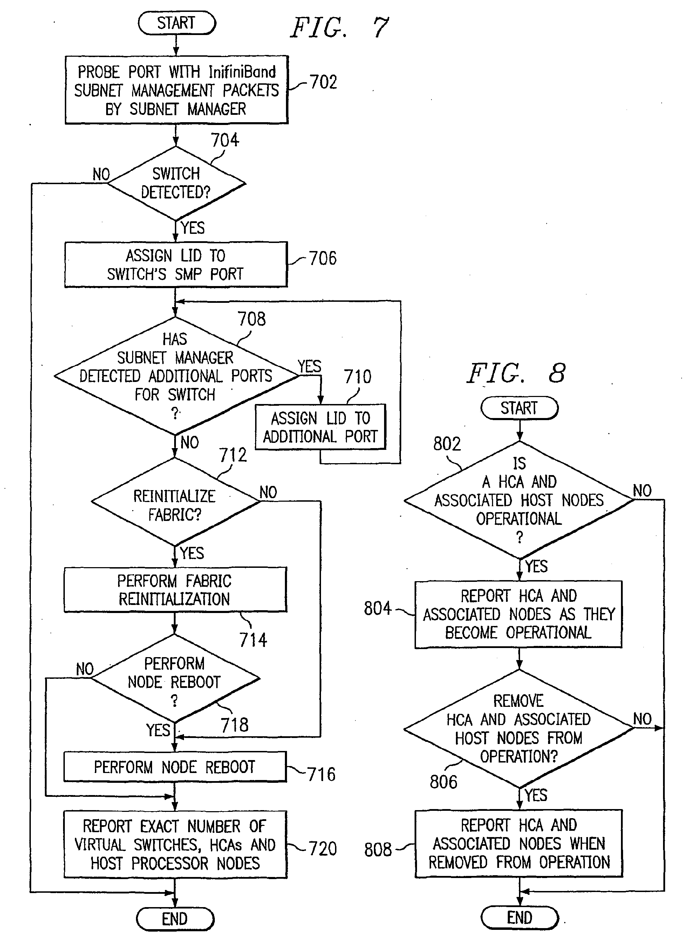

**Figure 7** is an exemplary flowchart illustrating an operation for a static selection system for a configuration of a physical element in accordance with a preferred embodiment of the present invention. In this example the operation starts by probing a port with InfiniBand subnet management packets by a subnet manager (step **702).** A determination is made as to whether or not a switch is detected in response to the probing of the port with the InfiniBand subnet management packets by the subnet manager (step **704).** If a switch is not detected (step **704:NO),** the operation terminates. If a switch is detected (step **704:YES),** then a LID is assigned to the switch's SMP port (step **706).**

A determination is then made as to whether or not the subnet manager has detected additional ports for the switch (step **708).** If the subnet manager has detected additional port(s) for the switch (step **708:YES),** then an LID is assigned to the additional port(s) (step **710)** and the operation returns to step **708** in which a determination is made as to whether or not the subnet manager has detected additional ports for the switch. If the subnet manager has not detected additional ports for the switch (step **708:NO),** then a determination is made as to whether or not fabric is to be reinitialized (step **712).** If the fabric is not to be reinitialized (step **712:NO),** a node reboot is performed (step **716).** The exact number of virtual switches, HCAs and host processor nodes are then reported to a subnet manager (step **720),** and thereafter the operation terminates. If the fabric is to be reinitialized (step **712:YES**), the fabric reinitialization is performed (step **714).** A determination is then made as to whether or not a node reboot is to be performed (step **718).** If a node reboot is to be performed (step **718:YES),** the node reboot is performed (step **716)** and the exact number of virtual switches, HCAs and host processor nodes are reported (step **720)** and thereafter the operation terminates. If node reboot is not to be performed (step **718:NO),** the exact number of virtual switches, HCAs and host processor nodes are reported (step **720)** and thereafter the operation terminates.

**Figure 8** is an exemplary flowchart illustrating reporting of host channel adapters and associated nodes as they become operational or are removed from operation in accordance with a preferred embodiment of the present invention. In this example, the operation starts by determining whether or not a HCA and the HCA's associated host nodes are operational (step **802).** If the HCA and the HCA's associated host nodes are not operational (step **802:NO),** the operation terminates. If the HCA and the HCA's associated host nodes are operational (step **802:YES),** then the HCA and associated nodes are reported as they become operational to a subnet manager (step **804).** A determination is then made as to whether or not the HCA and the HCA's associated host nodes have been removed from operation (step **806).** If the HCA and the HCA's associated host nodes have not been removed from operation (step **806:NO),** the operation terminates. If the HCA and the HCA's associated host nodes have been removed from operation (step **806:YES),** the HCA and the HCA's associated nodes are reported to be removed from operation (step **808),** and thereafter the operation terminates.

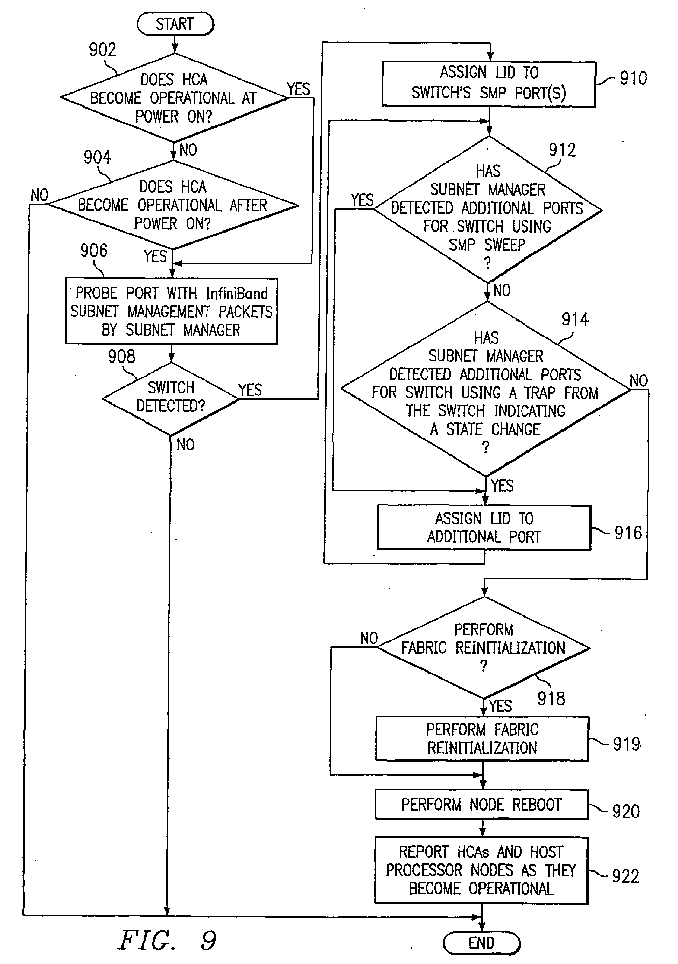

**Figure 9** is an exemplary flowchart illustrating an operation for a dynamic selection system for a configuration of a physical element in accordance with a preferred embodiment of the present invention. In this example, the operation starts by a determination as to whether or not a HCA becomes operational at a power on condition (step **902).** If a HCA does not become operational at a power on condition (step **902:NO),** a determination is made as to whether or not a HCA becomes operational after a power on condition (step **904).** If a HCA does not become operational after a power on condition (step **904:NO),** the operation terminates. If a HCA does become operational after a power on condition (step **904:YES),** the operation continues to step **906** in which a port is probed with InfiniBand subnet management packets by a subnet manager.

Returning to step **902,** if an HCA does become operational at a power on condition (step **902:YES),** a port is probed with InfiniBand subnet management packets by a subnet manager (step **906).** A determination is made as to whether or not a switch is detected (step **908).** If a switch is not detected (step **908:NO),** the operation terminates. If a switch is detected (step **908:YES),** a LID is assigned to the switch's SMP port (step **910).** A determination is then made as to whether or not a subnet manager has detected additional ports for the switch using a SMP sweep (step **912).** If a subnet manager has detected additional ports for the switch using a SMP sweep (step **912:YES),** a LID is assigned to the additional port and the operation continues to step **914** in which a determination is made as to whether or not the subnet manager has detected additional ports for the switch using a trap from the switch indicating a state change.

If the subnet manager has not detected additional ports for the switch using a SMP sweep (step **912:NO),** a determination is then made as to whether or not the subnet manager has detected additional ports for the switch using a trap from the switch indicating a state change (step **914).** If the subnet manager has detected additional ports for the switch using a trap from the switch indicating a state change (step **914:YES),** and LID is assigned to the additional port (step **916)** and the operation returns to step **912** in which a determination is made as to whether or not the subnet manager has detected additional ports for the switch using a SMP sweep.

If the subnet manager has not detected additional ports for the switch using a trap from the switch indicating a state change (step **914:NO),** a determination is made as to whether or not fabric reinitialization is to be performed (step **918).** If fabric reinitialization is to be performed (step **918:YES),** the fabric initialization is performed and the operation continues to step **920** in which a node reboot is performed. If a fabric initialization is not to be performed (step **918:NO),** then a node reboot is performed (step **920).** HCAs and host processor nodes are reported as they become operational (step **922)** and thereafter the operation terminates.

Therefore, the present invention provides for a mechanism to allow a single physical component to appear as multiple components with each single component having unique access control levels. The components may be host channel adapters (HCAs), target channel adapters (TCAs) or switches. Resources used to create the host channel adapters and switches may be obtained by a static or dynamic selection of software, firmware and state machine from a common pool. Allocation of these resources may be performed through various mechanisms. For example, a simple 1/N mechanism may be used to assign resources across all virtual HCAs. Alternatively, a weighted average mechanism may be used to create virtual HCAs with differing abilities, The resources may consist of, but are not limited to, all HCA and QP selectable modifiers. For example, these HCA and QP selectable modifiers may be a number of QPs, number of CQs, TPT size, P-Key table sizes, number of outstanding read RDMAs, and the like.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media, such as a floppy disk, a hard disk drive, a RAM, CD-ROMs, DVD-ROMs, and transmission-type media, such as digital and analog communications links, wired or wireless communications links using transmission forms, such as, for example, radio frequency and light wave transmissions. The computer readable media may take the form of coded formats that are decoded for actual use in a particular data processing system.

## Claims

1. A method for partitioning an end node (606) for a physical element (600), **characterized by** the steps of:
probing (702) a port (644) using a subnet management packet (SMP);
detecting (704) a switch (612) associated with the port (644) as a result of probing the port (644);
assigning (706) a local identifier (694) to an SMP port (686) of the switch (612);
detecting (708) an additional port (678) of the switch (612); and
assigning (710) a local identifier (670) to a port (650) of end node (606) corresponding to the additional port (678).

2. A system for partitioning an end node (606) for a physical element (600), **characterized by**;
means adapted for probing (702) a port (644) using a subnet management packet (SMP) ;
means adapted for detecting (704) a switch (612) associated with the port (644) as a result of probing the port (644);
means adapted for assigning (706) a local identifier (694) to an SMP port (686) of the switch (612);
means adapted for detecting (708) an additional port (678) of the switch (612); and
means adapted for assigning (710) a local identifier (670) to a port (650) of end node (606) corresponding to the additional port (678).

3. A computer program product stored on a computer-readable storage medium, for, when run on a computer system, carrying out the method of claim 1.

## Patentansprüche

1. Verfahren zur Unterteilung eines Endknotens (606) für ein physisches Element (600), das durch die folgenden Schritte **gekennzeichnet** ist:
unter Verwendung eines Teilnetz-Verwaltungspakets (SMP) Prüfen (702) eines Anschlusses (644);
als Ergebnis der Prüfung des Anschlusses (644) Feststellen (704) einer Vermittlungsstelle (612), die zu dem Anschluss (644) gehört;
Zuweisen (706) einer lokalen Kennung (694) zu einem SMP-Anschluss (686) der Vermittlungsstelle (612);
Feststellen (708) eines weiteren Anschlusses (678) der Vermittlungsstelle (612); und
Zuweisen (710) einer lokalen Kennung (670) zu einem Anschluss (650) des Endknotens (606), der dem weiteren Anschluss (678) entspricht.

2. System zur Unterteilung eines Endknotens (606) für ein physisches Element (600), das **gekennzeichnet ist durch**
ein Mittel, das so ausgelegt ist, dass es unter Verwendung eines Teilnetz-Verwaltungspakets (SMP) einen Anschluss (644) prüft (702);
ein Mittel, das so ausgelegt ist, dass es als Ergebnis der Prüfung des Anschlusses (644) eine zu dem Anschluss (644) gehörende Vermittlungsstelle (612) feststellt (704);
ein Mittel, das so ausgelegt ist, dass es einem SMP-Anschluss (686) der Vermittlungsstelle (612) eine lokale Kennung (694) zuweist (706);
ein Mittel, das so ausgelegt ist, dass es einen weiteren Anschluss (678) der Vermittlungsstelle (612) feststellt (708); und
ein Mittel, das so ausgelegt ist, dass es einem Anschluss (650) eines Endknotens (606), der dem weiteren Anschluss (678) entspricht, eine lokale Kennung (670) zuweist (710).

3. Rechnerprogrammprodukt, das auf einem rechnerlesbaren Speichermedium gespeichert wird und dazu dient, das Verfahren nach Anspruch 1 durchzuführen, wenn es auf einem Rechnersystem ausgeführt wird.

## Revendications

1. Procédé destiné à segmenter un noeud d'extrémité (606) pour un élément physique (600), **caractérisé par** les étapes consistant à :
tester (702) un port (644) en utilisant un paquet de gestion de sous-réseau (SMP),
détecter (704) un commutateur (612) associé au port (644) à la suite du test du port (644),
affecter (706) un identificateur local (694) à un port de paquet SMP (686) du commutateur (612),
détecter (708) un port supplémentaire (678) du commutateur (612), et
affecter (710) un identificateur local (670) à un port (650) d'un noeud d'extrémité (606) correspondant au port supplémentaire (678).

2. Système destiné à segmenter un noeud d'extrémité (606) pour un élément physique (600), **caractérisé par**
un moyen conçu pour tester (702) un port (644) en utilisant un paquet de gestion de sous-réseau (SMP),
un moyen conçu pour détecter (704) un commutateur (612) associé au port (644) à la suite du test du port (644),
un moyen conçu pour affecter (706) un identificateur local (694) à un port de paquet SMP (686) du commutateur (612),
un moyen conçu pour détecter (708) un port supplémentaire (678) du commutateur (612), et
un moyen conçu pour affecter (710) un identificateur local (670) à un port (650) d'un noeud d'extrémité (606) correspondant au port supplémentaire (678).

3. Produit de programme informatique mémorisé sur un support de mémorisation lisible par un ordinateur, destiné, lorsqu'il est exécuté sur un système informatique, à exécuter le procédé selon la revendication 1.
